# EUROPÄISCHE PATENTSCHRIFT

(11) **EP 3 086 464 B1**
(45) Veröffentlichungstag und Bekanntmachung des Hinweises auf die Patenterteilung: **26.10.2022**
(21) Anmeldenummer: 16165663.2
(22) Anmeldetag: 15.04.2016
(51) Int. Cl.: H02P 3/18, H02P 6/08, H02P 21/00, G01D 5/244

(54) **VERFAHREN ZUM BETRIEB EINER ELEKTRISCHEN MASCHINE UND ANTRIEB**
METHOD FOR OPERATING AN ELECTRIC MACHINE AND DRIVE
PROCEDE DESTINE AU FONCTIONNEMENT D'UNE MACHINE ELECTRIQUE ET ENTRAINEMENT

(30) Priorität: 23.04.2015 DE 102015207491
(43) Veröffentlichungstag der Anmeldung: 26.10.2016
(73) Patentinhaber: Baumüller Nürnberg GmbH, 90482 Nürnberg (DE)
(72) Erfinder: SCHINDLER, Achim, 85072 Eichstätt (DE)
(74) Vertreter: FDST Patentanwälte

(56) Entgegenhaltungen:
- DE-A1- 10 300 953
- DE-A1-102010 048 186
- DE-A1-102010 051 873
- DE-A1-102013 223 476
- DE-T5-112011 105 180

## Beschreibung

Die Erfindung betrifft ein Verfahren zum Betrieb einer einen Drehgeber aufweisenden elektrischen Maschine. Unter elektrische Maschine wird insbesondere eine Synchronmaschine verstanden. Die Erfindung betrifft ferner einen Antrieb mit einer elektrischen Maschine.

Bei elektromotorisch angetriebenen Maschinen, wie beispielsweise Werkzeugmaschinen, ist ein Wissen um die aktuelle Phasenlage des Elektromotors für den präzisen Betrieb der Maschine notwendig. So ist beispielsweise das genau Dosieren von Kunststoff bei einer Spritzgussmaschine oder der korrekte Druck mittels einer von Papierrollen gespeisten Offsetdruckmaschine lediglich möglich, wenn der aktuelle Winkel des Rotors bzgl. des Stators und/oder die aktuelle Rotationsgeschwindigkeit des Elektromotors bekannt ist. Üblicherweise ist daher an einer Welle des Rotors ein Drehgeber angeflanscht, der eine bestimmte Strichzahl aufweist, zum Beispiel 256. Folglich werden bei einer Umdrehung des Rotors um 360° mittels des Inkrementalgebers 256 Pulse ermittelt. Der Drehgeber ist beispielsweise als Inkrementalgeber, Resolver, SinCos-Hiperface, Endat oder digitaler Geber ausgestaltet.

In Abhängigkeit der ermittelten Phasenlage des Elektromotors wird dessen Bestromung mittels eines Umrichters angepasst. Bei einem Ausfall des Gebers ist folglich kein geregelter Betrieb des Elektromotors mehr möglich. Auch kann nicht sichergestellt werden, dass das von dem Elektromotor angetriebene Bauteil sich in einer definierten Position befindet, bei der eine Verletzung von Personen oder aber eine Beschädigung von weiteren Bauteilen ausgeschlossen werden kann. Daher wird üblicherweise bei einem Ausfall des Gebers eine Bestromung des Elektromotors beendet, sodass der Rotor momentenlos austrudelt. Hierfür werden sämtlich vorhandenen Pulse, mittels derer die Leistungshalbleiterschalter des Umrichters beaufschlagt werden sollen, gelöscht und eine weitere Erstellung weiterer Pulse gesperrt. Ein derartiges Abschalten ist als Sicher abgeschaltetes Moment ("Safe Torque Off'; STO) bekannt.

Je nach aktueller Belastung des Rotors, beispielsweise falls dieser zum Heben von Lasten verwendet wird, kann es sein, dass aufgrund des angetriebenen Bauteils die Zeitspanne zwischen der Beendung der Bestromung und dem endgültigen Stillstand des Elektromotors vergleichsweise groß ist. Auch könnte in diesem Fall eine von dem Elektromotor angehobene Last unkontrolliert zu Boden fallen, sofern für das Halten der Last auf einem bestimmten Niveau lediglich der Elektromotor verwendet wird. Um diesem vorzubeugen, sind üblicherweise mechanische Haltebremsen vorgesehen, die bei einem Geberausfall die Last oder eine Welle des Elektromotors abbremsen. Diese funktionieren lediglich als Sicherheitseinrichtung und werden daher im normalen Betrieb nicht benötigt. Damit die Bremsen jedoch auch die Last sicher beim Abschalten des Elektromotors halten können, müssen diese vergleichsweise groß dimensioniert sein. Infolgedessen weist der Elektromotor vergleichsweise kostenintensive Haltebremsen auf, die lediglich vergleichsweise selten benutzt werden. Daher sind die Herstellungskosten eines derartigen Elektromotors erhöht.

Aus der DE 10 2011 117 646 A1 ist ein Verfahren zum Betrieb eines Elektromotors bekannt, bei dem der Elektromotor auf Basis erster charakteristischer Daten gesteuert wird. Eine von der Gebereinrichtung unabhängige weitere Beobachtereinrichtung ermittelt zweite charakteristische Daten. Bei Auftreten eines vorgegebenen Fehlerzustands des Elektromotors wird der Elektromotor zeitweise auf Grundlage dieser zweiten charakteristischen Daten gesteuert.

Aus DE 103 00 953 A1 ist ein Verfahren zum Betrieb eines Stromrichters bekannt, der beispielsweise bei Werkzeugmaschinen, Produktionsmaschinen oder Robotern Verwendung findet. Im Normalfall erfolgt eine feldorientierte Regelung, und bei einem Ausfall eines Gebers wird auf eine nicht-feldorientierte Regelung umgeschaltet.

DE 10 2013 223 476 A1 offenbart ein Verfahren, bei dem im Normalfall eine Regelung herangezogen wird. Während eines Notfallbetriebs wird gesteuert. Es wird stets die Drehzahl herangezogen.

Aus DE 11 2011 105 180 T5 ist bekannt, einen Fehler eines Gebers zu erkennen, falls das Quadrat der Sinus-Spur zuzüglich des Quadrats der Kosinus-Spur von 1 um einen bestimmten Betrag abweicht. In diesem Fall wird eine Bestromung einer elektrischen Maschine unterbrochen.

Aus DE 10 2010 048 186 A1 ist es bekannt, Signale eines Inkrementalgebers zu überwachen. Hierbei wird das Quadrat der Sinus-Spur zu dem Quadrat der Kosinus-Spur addiert und hinsichtlich einer Abweichung von einem festgelegten Wert analysiert.

Aus DE 10 2010 051 873 A1 ist es bekannt, einen Geberfehler anhand einer Abweichung der Summe der Quadrate einer Sinus- bzw. Kosinus-Spur zu ermitteln und hinsichtlich eines Maximal- und Minimalwerts zu vergleichen.

Der Erfindung liegt die Aufgabe zugrunde, ein besonders geeignetes Verfahren zum Betrieb einer elektrischen Maschine und einen besonders geeigneten Antrieb mit einer elektrischen Maschine anzugeben, bei dem vorzugsweise die Sicherheit erhöht und insbesondere Herstellungskosten gesenkt sind.

Hinsichtlich des Verfahrens wird diese Aufgabe durch die Merkmale des Anspruchs 1 und hinsichtlich des Antriebs durch die Merkmale des Anspruchs 9 erfindungsgemäß gelöst. Vorteilhafte Weiterbildungen und Ausgestaltungen sind Gegenstand der Unteransprüche.

Das Verfahren dient dem Betrieb einer elektrischen Maschine, die einen Drehgeber aufweist. Die elektrische Maschine ist beispielsweise ein Generator, insbesondere jedoch ein Elektromotor. Beispielsweise ist die elektrische Maschine eine Synchronmaschine, und/oder die elektrische Maschine weist eine Anzahl an Permanentmagneten auf. Besonders bevorzugt ist die elektrische Maschine ein permanent erregter Synchronmotor. Die elektrische Maschine ist beispielsweise Bestandteil einer Industrieanlage. Geeigneterweise ist die elektrische Maschine Bestandteil eines Antriebs einer Kunststoffspritzgussmaschine. Alternativ wird die elektrische Maschine zum Antreiben vergleichsweise großer Massen verwendet, wie zum Beispiel eines Förderbandes. Die elektrische Maschine weist einen Drehgeber auf, beispielsweise einen Inkrementalgeber. Mittels des Drehgebers wird eine Position eines Rotors der elektrischen Maschine bezüglich eines Stators ermittelt.

Die elektrische Maschine wird geregelt betrieben, wobei als Führungsgröße ein aktueller Winkel des Rotors bezüglich des Stators herangezogen wird. Anhand der Führungsgröße wird zweckmäßigerweise eine Stellgröße ermittelt, beispielsweise ein elektrischer Strom oder eine elektrische Spannung. Die Führungsgröße wird mit dem mittels des Drehgebers erfassten Winkels verglichen und eine Abweichung hiervon ermittelt. Anhand der Abweichung wird beispielsweise die Stellgröße angepasst, sodass die Abweichung zwischen der Führungsgröße und dem Messwert gegen Null geht. Insbesondere wird ausgehend von der Abweichung die Bestromung der elektrischen Maschine angepasst, wofür geeigneterweise ein Umrichter verwendet wird, der beispielsweise eine Brückenschaltung mit zumindest einem Halbleiterschaltern aufweist. Der Halbleiterschalter ist zweckmäßigerweise ein Leistungshalbleiterschalter, wie ein IGBT. Zusammenfassend ist die Führungsgröße im geregelten Betrieb der aktuelle Winkel, also eine Drehzahl zuzüglich einer Phase bzw. eines Offsets, sodass die gewünschte Position des Rotors bezüglich des Stators stets definiert ist.

Falls im geregelten Betrieb ein Geberfehler erkannt wird, also falls erkannt wird, dass der Drehgeber fehlerhaft ist, wird auf einen gesteuerten Betrieb umgeschaltet. Im gesteuerten Betrieb wird als Führungsgröße ebenfalls ein aktueller Winkel herangezogen. Die Führungsgröße ist hierbei im gesteuerten Betrieb zumindest zeitweise geeigneterweise verschieden von Null. Mit anderen Worten verschwindet die Führungsgröße im gesteuerten Betrieb nicht. Insbesondere wird die elektrische Maschine im gesteuerten Betrieb weiter mit elektrischer Energie versorgt Im Unterschied zum geregelten Betrieb erfolgt lediglich keine Überprüfung einer Abweichung zwischen der Vorgabe, also der Führungsgröße, und den realisierten Werten, also insbesondere Messwerten, die ansonsten mittels des Drehgebers erfasst würden.

Insbesondere wird mittels des Drehgebers eine Cosinus-Spur und eine Sinus-Spur ausgegeben, und anhand dieser eine Position des Rotors bezüglich des Stators ermittelt. Hierfür umfasst der Drehgeber beispielsweise zwei zueinander um einen bestimmten Winkel bezüglich der Achse der elektrischen Maschine versetzte Sensoren, die mit einem an dem Rotor angebrachten weiteren Bestandteil des Drehgebers wechselwirken, wie einem Permanentmagneten. Falls der Drehgeber korrekt arbeitet, und die elektrische Maschine eine konstante Geschwindigkeit aufweist, wird hierbei mittels eines der Sensoren ein Messsignal erfasst, das zeitlich einen Cosinus-förmigen Verlauf aufweist. Mittels des weiteren Sensors wird ein Messsignal erfasst, das zeitlich einen Sinus-förmigen Verlauf aufweist. Diese beiden Messsignale sind die Cosinus-Spur und die Sinus-Spur. Die beiden Spuren sind in diesem Fall mit Ausnahme einer zeitlichen Phase gleich. Mit anderen Worten sind die beiden Spuren zueinander phasenversetzt.

Zweckmäßigerweise wird der Geberfehler erkannt, also eine Fehlfunktion des Drehgebers ermittelt, falls die Summe aus dem Quadrat des aktuellen Werts der Cosinus-Spur und dem Quadrat des aktuellen Werts der Sinus-Spur kleiner als ein Grenzwert ist. Beispielsweise ist der Grenzwert kleiner oder gleich 0,98, 0,95, 0,92, 0,9, 0,85 und vorzugsweise größer als 0,8, 0,87, 0,92, 0,96, sofern der Drehgeber derart kalibriert ist, dass die Sinus- und die Cosinus-Spur jeweils eine Amplitude von Eins (1) aufweist. Sofern folglich zumindest einer der Sensoren des Drehgebers ausfällt, und folglich keine Messsignale mehr erfasst werden, wird der Geberfehler erkannt. Da als Grenzwert ein Wert gewählt wird, der geringer als 1 ist, wird eine aufgrund von Messungenauigkeiten oder einer fehlerhaften Kalibrierung entstehender Schwankung nicht fälschlicherweise als Geberfehler erkannt. Auf diese Weise ist eine vergleichsweise robuste Erkennung des Geberfehlers sichergestellt, wobei keine vergleichsweise rechenintensive Auswertung erfolgt. Folglich ist auch die Zeitspanne, die zwischen Auftreten des Geberfehlers und Erkennen des Geberfehlers verstreicht, vergleichsweise gering.

Insbesondere wird ein zweiter Grenzwert herangezogen, und es wird überprüft, ob der aktuelle Wert der Cosinus-Spur zum Quadrat zuzüglich des aktuellen Wertes der Sinus-Spur zum Quadrat den zweiten Grenzwert übersteigt. Zum Beispiel ist der zweite Grenzwert größer als 1 oder 1,05 oder 1,1, sofern der Drehgeber derart kalibriert ist, dass sowohl die Amplitude der Cosinus-Spur als auch der Sinus-Spur gleich Eins (1) ist. Zweckmäßigerweise ist der Grenzwert kleiner als 1,2, 1,12 oder 1,08. Falls folglich eine Fehlfunktion zumindest eines der Sensoren des Drehgebers vorliegen sollte, der sich entweder in einem Ausfall des Sensors oder aber beispielsweise einen Kurzschluss manifestiert, wird der Geberfehler erkannt. Mit anderen Worten wird überwacht, ob die Summe der Quadrate sich innerhalb eines zwischen dem Grenzwert und dem zweiten Grenzwert gebildeten Bereichs befindet. Sofern der Drehgeber ordnungsgemäß funktioniert, und der Drehgeber korrekt kalibriert ist, wäre nämlich die Summe aus dem aktuellen Wert der Cosinus-Spur zum Quadrat und dem aktuellen Wert der Sinus-Spur zum Quadrat stets konstant, und zwar gleich 1. Beispielsweise wird vor dem Vergleich mit dem Grenzwert bzw. dem zweiten Grenzwert aus der Summe der Quadrate die Wurzel gezogen, was dem Radius eines Kreises entspricht, der mittels der Cosinus-Spur und der Sinus-Spur definiert wird. Folglich wird ein Geberfehler erkannt, falls der Radius des Kreises sich verändert. Hierbei ist beispielsweise der Geberfehler erkannt, falls der Radius geringer als die Wurzel des Grenzwerts ist. Der Geberfehler kann auch auf andere Weise ermittelt werden. Beispielsweise ist der Drehgeber als Inkrementalgeber, Resolver, SinCos-Hiperface, Endat oder digitaler Geber ausgestaltet.

Insbesondere wird im geregelten Betrieb aus der verwendeten Führungsgröße eine Stellgröße ermittelt. Als Stellgröße wird geeigneterweise eine elektrische Spannung herangezogen. Sofern folglich als Führungsgröße ein aktueller Winkel herangezogen wird, wird ausgehend von diesem eine elektrische Spannung ermittelt, mittels derer die elektrische Maschine beaufschlagt werden muss, damit die elektrische Maschine die mittels der Führungsgröße definierte Position einnimmt, was mittels des Drehgebers überwacht wird. Insbesondere wird bei geregeltem Betrieb eine feldorientierte Regelung herangezogen. Mit anderen Worten wird bei der feldorientierten Regelung im geregelten Betrieb die elektrische Spannung als Raumzeiger ermittelt, und die elektrische Maschine entsprechend der Raumzeigerdarstellung der elektrischen Spannung angesteuert. Die elektrische Spannung ist in einer vergleichsweise kurzen Zeitspanne einstellbar, sodass die Regelgüte im geregelten Betrieb aufgrund der geringen Totzeit vergleichsweise hoch ist. Mit anderen Worten wird anhand der Führungsgröße im geregelten Betrieb als Stellgröße die elektrische Spannung ermittelt. Die Einstellung der elektrischen Spannung erfolgt bevorzugt mittels des Umrichters, sofern dieser vorhanden ist.

Im gesteuerten Betrieb wird ein aktueller Winkel als Führungsgröße herangezogen. Beim Umschalten auf den gesteuerten Betrieb wird als, insbesondere aktuelle, Führungsgröße die, insbesondere letzte verwendete, Führungsgröße des geregelten Betriebs herangezogen. Mit anderen Worten wird, sobald der Geberfehler erkannt ist, die zuletzt beim geregelten Betrieb verwendete Führungsgröße ermittelt, und diese für den zeitlich nachfolgenden gesteuerten Betrieb als aktuell gültige Führungsgröße verwendet. Im weiteren zeitlichen Verlauf wird die Führungsgröße ausgehend von diesem Startpunkt zweckmäßigerweise verändert. Da beidemal als Führungsgröße der aktuelle Winkel herangezogen wird, ist ein ruckfreier Übergang zwischen dem geregelten und dem gesteuerten Betrieb ermöglicht, wobei beispielsweise im gesteuerten Betrieb mittels der Führungsgröße sichergestellt ist, dass der Rotor der elektrischen Maschine zumindest zunächst noch mit einer bestimmten Drehzahl weiterdreht. Auf diese Weise ist einerseits eine vergleichsweise schnelle Ermittlung der Führungsgröße des gesteuerten Betriebs ermöglicht. Andererseits sind vergleichsweise starke Änderungen eines elektrischen Stroms oder einer elektrischen Spannung vermieden oder aber eine vergleiche abrupte Änderung eines Bewegungsablaufs der elektrischen Maschine, sodass eine mechanische Belastung von mit der elektrischen Maschine verbundenen Bauteile unterbleibt.

Im gesteuerten Betrieb wird die Drehzahl der elektrischen Maschine verringert, nämlich auf Null (0). Dies erfolgt innerhalb einer ersten Zeitspanne, die beispielsweise unabhängig von der Führungsgröße oder der vor Erkennen des Geberfehlers ermittelten Drehzahl ist. Zum Beispiel ist die erste Zeitspanne konstant und fest vorgegeben. Alternativ hierzu hängt die erste Zeitspanne von der Führungsgröße oder aber der ermittelten Drehzahl ab. Hierbei wird zweckmäßigerweise eine maximale zeitliche Änderung der Drehzahl vorgegeben. Beispielsweise erfolgt die Änderung der Drehzahl exponentiell, sodass innerhalb einer vergleichsweise kurzen Zeit eine vergleichsweise starke Bremsung erfolgt. Besonders bevorzugt jedoch wird zumindest abschnittsweise die Drehzahl linear in der Zeit abgesenkt, insbesondere wird innerhalb der vollständigen ersten Zeitspanne die Drehzahl linear abgesenkt. Auf diese Weise ist eine Belastung von mit der elektrischen Maschine verbundenen weiteren Geräten vergleichsweise gering. Die erste Zeitspanne wird vorzugsweise mit Umschalten von dem geregelten Betrieb zu dem gesteuerten Betrieb gestartet. Zusammenfassend wird im gesteuerten Betrieb bevorzugt die Drehzahl als Führungsgröße verwendet, und diese innerhalb der ersten Zeitspanne auf Null abgesenkt, wobei die ersten Zeitspanne zweckmäßigerweise mit Umschalten von dem geregelten Betrieb zu dem gesteuerten Betrieb beginnt. Beispielsweise ist die erste Zeitspanne kleiner oder gleich 5 Sekunden, 3 Sekunden, 2 Sekunden, 1 Sekunde, 0,1 Sekunden, 0,01 Sekunden oder 0,001 Sekunden. Insbesondere wird eine erste Zeitspanne zwischen 1 ms und 10 ms gewählt.

Auf diese Weise ist ein vergleichsweise schneller Stillstand der elektrischen Maschine gewährleistet, was bei lediglich einer Unterbrechung der Stromversorgung bei Erkennen eines Geberfehlers und folglich lediglich einem Austrudeln der elektrischen Maschine nicht der Fall wäre. Beispielsweise wird mittels des Verfahrens eine sichere Funktion realisiert, insbesondere Sicherer Stopp 1 ("Safe Stop 1"; SS1) nach EN 60204-1 oder Sicherer Stopp 2 ("Safe Stop 2"; SS2) nach EN 60204-1.

Beispielsweise wird als Stellgröße des gesteuerten Betriebs zumindest zeitweise ein elektrischer Strom als Stellgröße herangezogen. Insbesondere wird im Wesentlichen unverzüglich nach Umschalten in den gesteuerten Betrieb als Stellgröße der elektrische Strom herangezogen. Zweckmäßigerweise wird hierbei auf die Stellgröße geregelt. Mit anderen Worten mittels einer unterlagerten Regelung auf die Stellgröße des gesteuerten Betriebs geregelt. Der elektrische Strom wird zweckmäßigerweise in eine flussbildende und eine drehmomentbildende Komponente zerlegt. Mit anderen Worten wird insbesondere für den elektrischen Strom, auf den geregelt wird, ein Vektor gewählt, der die flussbildende und die drehmomentbildende Komponente aufweist. Zweckmäßigerweise wird der elektrische Strom eingeprägt, beispielsweise mittels eines Umrichters. Insbesondere wird der Vektor anhand der mittels des Drehgebers erfassten Werte ermittelt, zweckmäßigerweise anhand der vor Ermittlung des Geberfehlers zeitlich letzten Werte. Beispielsweise wird hierbei die drehmomentbildende Komponente konstant gewählt, vorzugsweise gleich Null, sodass im Wesentlichen kein Drehmoment im gesteuerten Betrieb aufgebracht wird. Auf diese Weise kann eine Beschädigung von etwaigen mit der elektrischen Maschine verbundenen Geräten aufgrund eines überhöhten Drehmoments ausgeschlossen werden. Auch ist die Ermittlung der Stellgröße aus der Führungsgröße in einer vergleichsweisen kurzen Zeit möglich, sodass auch bei einem Ausfall von weiteren Teilen der elektrischen Maschine der gesteuerte Betrieb realisiert werden kann.

Insbesondere wird für die vollständige Zeit des gesteuerten Betriebs als Stellgröße der elektrische Strom herangezogen. Auf diese Weise ist ein Ausbilden von vergleichsweise hohen Strömen unterbunden, die anderweitig zu einer Zerstörung von elektrischen Leitungen, die mit der elektrischen Maschine verbunden sind, oder einem Auslösen eines Schutzschalters oder einer Sicherung führen würde. Zweckmäßigerweise wird die Frequenz, mittels derer die flussbildende Komponente bezüglich eines ortsfesten Koordinatensystems rotiert wird, verringert.

In einem weiteren Ausführungsbeispiel wird nach dem Umschalten der elektrische Strom gleich Null gewählt. Mit anderen Worten wird eine verschwindende flussbildende Komponente und eine verschwindende drehmomentbildende Komponente gewählt. Zweckmäßigerweise wird hierauf geregelt. Mit anderen Worten wird im gesteuerten Betrieb die elektrische Maschine auf einen elektrischen Strom von Null geregelt, also darauf, dass kein elektrischer Strom fließt. Zweckmäßigerweise schließt sich die zweite Zeitspanne im Wesentlichen direkt an den Zeitpunkt des Umschaltens an. Beispielsweise ist die zweite Zeitspanne größer oder gleich 1 ms, 1,5 ms und vorzugsweise kleiner oder gleich 4 ms oder 5 ms. Insbesondere ist die zweite Zeitspanne zwischen 2 ms und 3 ms lang. Nach Ablauf der zweiten Zeitspanne liegt an der elektrischen Maschine folglich eine elektrische Spannung an, die sich aufgrund der gegen-elektromagnetischen Kraft ergibt.

Zweckmäßigerweise wird nach Ablauf der zweiten Zeitspanne als Stellgröße des gesteuerten Betriebs eine elektrische Spannung herangezogen, insbesondere direkt nach Ablauf der zweiten Zeitspanne. Beispielsweise wird als aktuelle Stellgröße der dem gesteuerten Betrieb unterlagerten Regelung derjenige Wert der elektrischen Spannung herangezogen, der sich aufgrund der gegen-elektromagnetischen Kraft ergibt, und der insbesondere mittels eines Sensors erfasst, und insbesondere gemessen, wurde, zweckmäßigerweise innerhalb der zweiten Zeitspanne. Besonders bevorzugt wird die elektrische Spannung anhand eines Models ermittelt, also berechnet. Folglich wird die elektrische Spannung berechnet, die sich bei einem elektrischen Strom, der Null (0) beträgt, insbesondere nach Ablauf der zweiten Zeitspanne ergeben würde. Mit anderen Worten wird die elektrische Spannung mittels Berechnung erfasst. Insbesondere wird nach der zweiten Zeitspanne die aktuelle Führungsgröße der unterlagerten Regelung anhand der innerhalb oder am Ende der zweiten Zeitspanne erfassten elektrischen Spannung ermittelt. Zusammenfassend wird nach Umschalten in den gesteuerten Betrieb für die zweite Zeitspanne zunächst auf einen elektrischen Strom von Null geregelt. Nach Ablauf der zweiten Zeitspanne wird auf eine elektrische Spannung geregelt, wobei hierfür als aktueller Führungswert, also bei Beginn der Regelung auf die elektrische Spannung, ein Wert herangezogen wird, der anhand einer Messung der elektrischen Spannung innerhalb oder am Ende der zweiten Zeitspanne oder anhand eines Models ermittelt wurde. Insbesondere wird hierbei durchgehend als Führungsgröße des gesteuerten Betriebs ein aktueller Winkel der elektrischen Maschine herangezogen. Vorzugsweise wird bei Regelung auf die elektrische Spannung ebenfalls die Führungsgröße innerhalb der ersten Zeitspanne auf Null abgesenkt, sodass die elektrische Maschine nach Ablauf der ersten Zeitspanne stillsteht. Zweckmäßigerweise wird die elektrische Spannung proportional zur Drehzahl auf Null (0) geregelt, insbesondere linear. Aufgrund der Regelung auf einen elektrischen Strom von Null und aufgrund der anschließenden Regelung auf die elektrische Spannung, die als Stellgröße der Führungsgröße des gesteuerten Betriebs verwendet wird, werden vergleichsweise hohe Ströme vermieden, sodass eine Belastung eines etwaigen mit der elektrischen Maschine verbundenen Umrichters oder eines Versorgungsnetzes verringert ist.

Zusammenfassend wird mittels des Verfahrens insbesondere sichergestellt, dass ein sich bewegendes Werkstück, das mittels der elektrischen Maschine angetrieben wird, im Fehlerfall, also wenn ein Geberfehler vorliegt, rechtzeitig abgebremst wird, sodass ein ungewünschter mechanischen Kontakt dieses Werkstücks mit einem weiteren Bauteil vermieden wird, was anderweitig zu einer Beschädigung des Werkstücks und/oder des Bauteils führen könnte. In einer weiteren Ausführungsform wird für die vollständige Zeit des gesteuerten Betriebs als Stellgröße die elektrische Spannung herangezogen, zumindest jedoch für einen sich an das Erkennen des Geberfehlers direkt anschließenden Zeitraum.

Der Antrieb weist einen Umrichter auf, der insbesondere eine Brückenschaltung mit mehreren Leistungshalbleiterschaltern, wie IGBTs, umfasst. Der Antrieb weist ferner eine elektrische Maschine auf, die elektrisch mit dem Umrichter gekoppelt ist. Mit anderen Worten wird bei Betrieb die elektrische Maschine mittels des Umrichters bestromt. Die elektrische Maschine umfasst einen Drehgeber, beispielsweise einen Inkrementalgeber. Der Drehgeber umfasst bevorzugt zwei Sensoren, insbesondere Hall-Sensoren. Einer der Sensoren gibt hierbei bei Betrieb bevorzugt eine Cosinus-Spur und der verbleibende eine Sinus-Spur aus.

Die elektrische Maschine wird mittels des Umrichters geregelt betrieben. Hierbei werden zweckmäßigerweise Messdaten des Drehgebers ausgewertet und eine Ansteuerung des Umrichters angepasst, insbesondere werden Taktsignale angepasst, mittels derer die Halbleiterschalter von einem leitenden in einen nichtleitenden Zustand und umgekehrt versetzt werden. Sobald ein Geberfehler erkannt wird, also sobald erkannt wird, dass die mittels des Drehgebers erfassten Werte fehlerhaft sind, oder aber eine andere Fehlfunktion des Drehgebers erkannt wird, wird von dem geregelten Betrieb in einen gesteuerten Betrieb umgeschaltet.

Die elektrische Maschine ist beispielsweise ein permanenterregter Elektromotor, beispielsweise ein Synchronmotor. Insbesondere ist der Antrieb Bestandteil einer Extrudermaschine oder einer Vorrichtung zum Kunststoffspritzgießen. Beispielsweise wird der Antrieb innerhalb einer Industrieanlage verwendet.

Nachfolgend wird die Erfindung anhand einer Zeichnung näher erläutert. Darin zeigen:
- Fig. 1: schematisch einen Antrieb mit einer elektrischen Maschine,
- Fig. 2: ein Verfahren zum Betrieb der elektrischen Maschine,
- Fig. 3: schematisch eine Stellgröße,
- Fig. 4: Sensorsignale eines Drehgebers der elektrischen Maschine,
- Fig. 5: eine erste Variante eines gesteuerten Betriebs,
- Fig. 6: eine weitere Variante des Verfahrens, und

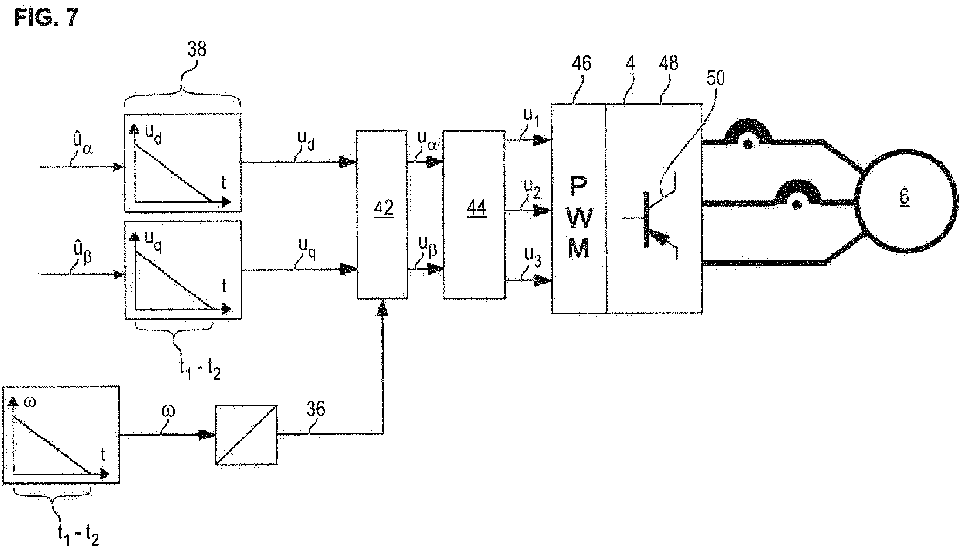

- Fig. 7: eine weitere Variante des gesteuerten Betriebs.

Einander entsprechende Teile sind in allen Figuren mit dem gleichen Bezugszeichen versehen.

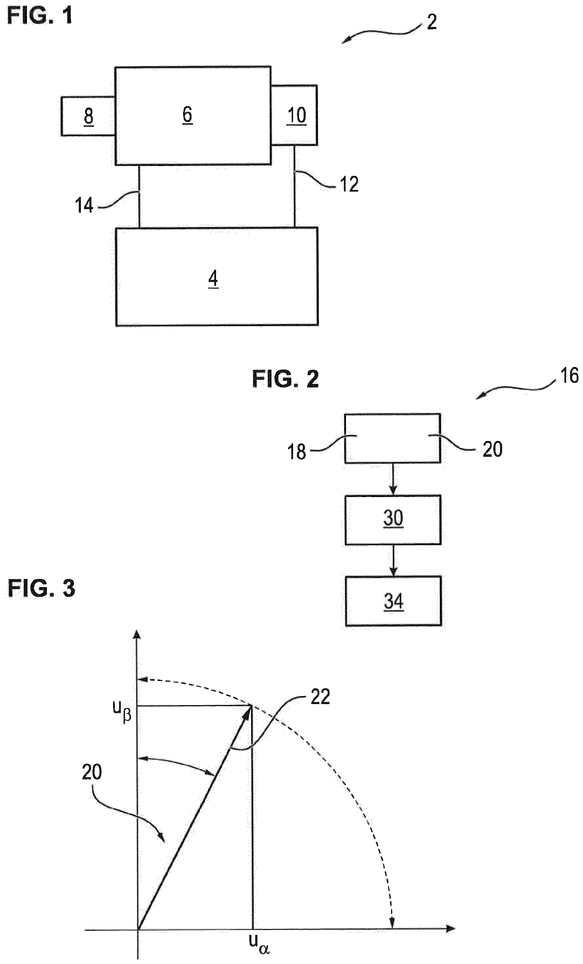

In Fig. 1 ist ein Antrieb 2 mit einem Umrichter 4 und einer elektrischen Maschine 6 gezeigt. Die elektrische Maschine 6 umfasst eine Welle 8, an der nicht näher dargestellte Permanentmagnete befestigt sind. Die Welle 8 ragt einseitig aus einem Gehäuse der elektrischen Maschine 6 heraus. Mit diesem Teil der Welle 8 werden weitere Bestandteile einer Kunststoffspritzanlage gekoppelt. Auf der diesem Teil der Welle 8 gegenüberliegenden Seite befindet sich ein Drehgeber 10 in Form eines Inkrementalgebers, der mittels einer Signalleitung 12 mit dem Umrichter 4 verbunden ist. Der Umrichter 4 ist ferner mittels einer Stromleitung 14 mit nicht näher gezeigten Statorspulen der elektrischen Maschine 6 elektrisch kontaktiert.

In Fig. 2 ist ein Verfahren 16 zum Betrieb der elektrischen Maschine 6 dargestellt. Zunächst wird ein geregelter Betrieb 18 herangezogen. Bei diesem wird eine Führungsgröße 20 vorgegeben, die dem aktuellen Winkel der Welle 8 bezüglich des die elektrische Spulen aufweisenden Stators der elektrischen Maschine 6 entspricht. Die Führungsgröße 20 ist zeitlich veränderlich, sodass beim geregelten Betrieb 18 die Welle 8 rotiert. Ausgehend von der Führungsgröße 20 wird eine in Fig. 3 exemplarisch gezeigte Stellgröße 22 in Form eines elektrischen Spannungsvektors ermittelt, der eine erste Spannungskomponente u_{α} und eine zweite Spannungskomponente u_{β} aufweist. Bei der elektrischen Maschine 6 handelt es sich um eine Synchronmaschine, sodass auch der zwischen der Stellgröße 22 und einer drehfesten Achse gebildete Winkel der Führungsgröße 20 entspricht.

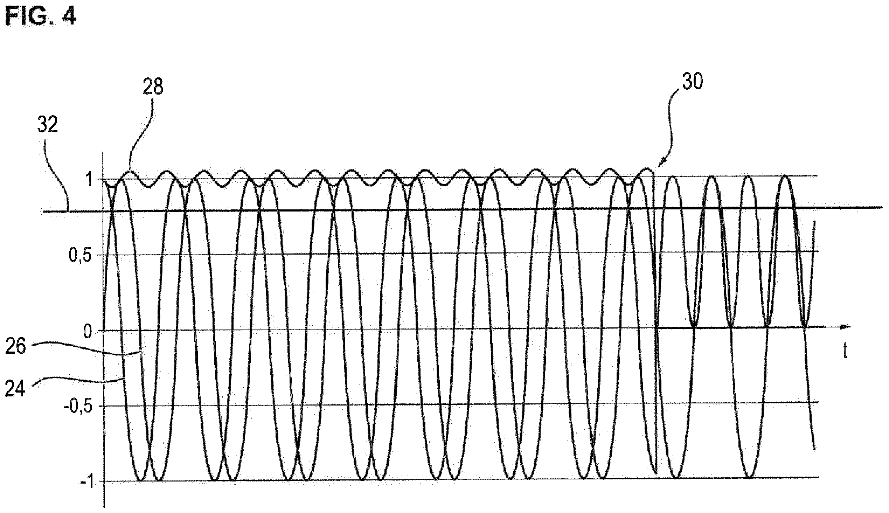

Mittels des Drehgebers 10 wird ausgewertet, ob die Welle 8 bezüglich des Stators die gewünschte Führungsgröße 20 einnimmt. Hierfür wird jeweils ein aktueller Wert einer in Fig. 4 gezeigten Cosinus-Spur 24 und der gleichzeitig aufgenommene aktuelle Wert einer Sinus-Spur 26 ausgewertet. Die Cosinus-Spur 24 und die Sinus-Spur 26 werden jeweils mittels eines Hall-Sensors des Drehgebers 20 erzeugt, die bezüglich der Achse der elektrischen Maschine 6 um einen bestimmten Winkel zueinander versetzt sind. Folglich wird mittels der Cosinus- und der Sinus-Spur 24, 26 die Bewegung der Welle 8 nachgebildet. Das Quadrat der Cosinus-Spur 24 zuzüglich des Quadrats der Sinus-Spur 26 bildet eine Amplitude 28. Alternativ ist die Amplitude 28 als Wurzel aus der Summe der beiden Quadrate definiert. Sofern der Drehgeber 10 korrekt kalibriert ist, ist die Amplitude 28 konstant. Bei einer fehlerhaften Kalibrierung oder Montage ist es jedoch möglich, dass die Amplitude 28 vergleichsweise kleine Schwingungen aufweist.

Der geregelte Betrieb 18 wird beendet, falls ein Geberfehler 30 erkannt wird. Hierfür wird die Amplitude 28 überwacht und mit einem Grenzwert 32 verglichen. In dem in Fig. 4 gezeigten Graphen fällt zu einem bestimmten Zeitpunkt der die Cosinus-Spur 24 liefernde Sensor aus und liefert einen konstanten Wert von Null (0). Infolgedessen sinkt die Amplitude 28 unter den Grenzwert 32 und der Geberfehler 30 ist erkannt. Im Anschluss hieran ist die Amplitude 28 das Quadrat der Sinus-Spur und schwankt daher zwischen Null und der Amplitude der Sinus-Spur 26, hier Eins (1).

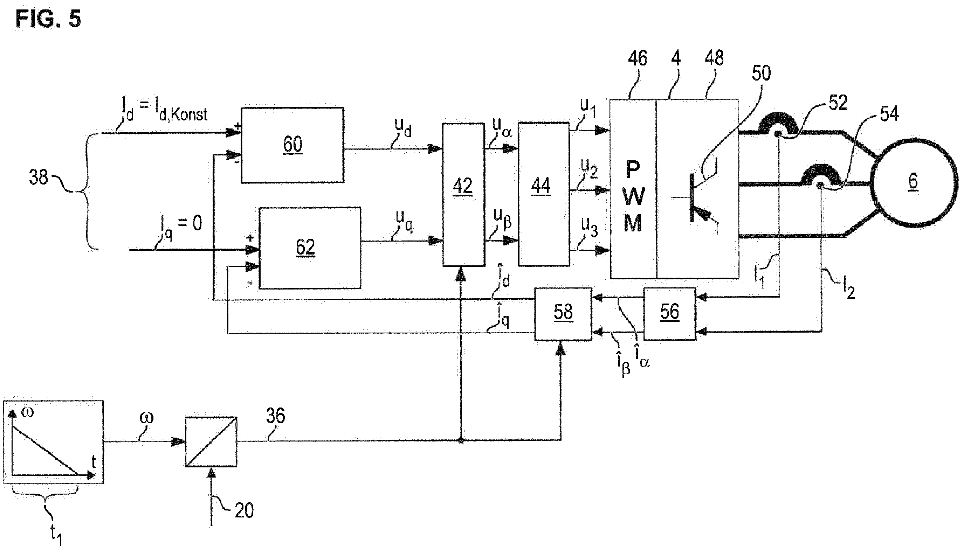

Sobald der Geberfehler 30 erkannt wurde, wird auf einen gesteuerten Betrieb 34 umgeschaltet. Infolgedessen werden sämtliche mittels der Signalleitung 12 übertragene Signale ignoriert und die Bestromung der elektrischen Maschine 6 erfolgt in einer Variante einem in Fig. 5 gezeigten Verfahrensschritt. Zunächst wird die Führungsgröße 20 des geregelten Betriebs 18 zum Zeitpunkt des Erkennens des Geberfehlers 30 ermittelt und als eine Führungsgröße 36 des gesteuerten Betriebs herangezogen. Hiervon ausgehend wird eine Stellgröße 38 des gesteuerten Betriebs ermittelt, die ein Stromvektor mit einer flussbildenden Komponente I_{d} und einer drehmomentbildenden Komponente I_{q}. Hierbei wird die drehmomentbildende Komponente I_{q} gleich Null gewählt. Hieraus ausgehend wird eine dritte und vierte Spannungskomponente u_{d}, u_{q} ermittelt, die den Wert einer elektrischen Spannung innerhalb eines mit der Welle 8 rotierenden Koordinatensystems entspricht, bei deren Anlegen an die Stromleitung 14 die flussbildende und die drehmomentbildende Komponente I_{d}, I_{q} realisiert werden. Die dritte und vierte Spannungskomponente u_{d}, u_{q} werden einem ersten Modul 42 zugeführt, mittels dessen die dritte und vierte Spannungskomponente u_{d}, u_{q} in ein rotationsfestes Koordinatensystem transformiert werden und folglich die erste und zweite Spannungskomponente u_{α}, u_{β} ermittelt wird. Mit anderen Worten wird ein rotierender Spannungsvektor ermittelt.

Die erste und zweite Spannungskomponente ua, u_{β} werden einem zweiten Modul 44 zugeführt, mittels dessen eine erste, zweite und dritte Phasenspannung u₁, u₂, u₃ ermittelt wird, die zu den Spannungen korrespondiert, mittels derer die drei Phasen der elektrischen Maschine 6 beaufschlagt werden sollen. Diese werden einer Brückenschaltung 48 mit einer Anzahl von Halbleiterschaltern 50 in Form von IGBTs zugeführt und folglich ein Stromfluss über die Stromleitung 14 zur elektrischen Maschine 6 erstellt. Die Halbleiterschalter 50 sind hierbei in einer B6-Schaltung miteinander verschaltet.

Der tatsächlich fließende Strom wird mittels eines ersten Stromsensors 52 und eines zweiten Stromsensors 54 erfasst und einen dritten Modul 56 zugeleitet, mittels dessen eine gemessene erste Stromkomponente î_{α} und eine gemessene zweite Stromkomponente î_{β} erstellt wird. Die erste und zweite Stromkomponente î_{α}, î_{β} entsprechen den Komponenten des Stromvektors in einem drehfesten Koordinatensystem. Diese werden einem vierten Modul 58 zugeleitet und eine gemessene dritte Stromkomponente î_{d} an eine gemessene vierte Stromkomponente î_{q} erstellt, die dem Stromvektor in einem mit der Welle 8 rotierenden Koordinatensystem entsprechen. Die gemessene dritte Stromkomponente î_{d} wird einem ersten Regler 60 zugeführt und dort mit der flussbildenden Komponente I_{d} verglichen. Hiervon ausgehend wird eine geänderte dritte Spannungskomponente u_{d} erstellt und diese dem ersten Modul 42 zugeführt. Die gemessene vierte Stromkomponente î_{q} wird einem zweiten Regler 62 zugeführt und mit der Vorgabe verglichen, dass diese verschwinden soll. Hiervon ausgehend wird eine geänderte vierte Spannungskomponente u_{q} erstellt und diese dem ersten Modul 42 zugeführt. Zusammenfassend wird im gesteuerten Betrieb 34 die elektrische Maschine 4 auf die Stellgröße 38 geregelt, die anhand der Führungsgröße 36 ermittelt wurde.

Im gesteuerten Betrieb 34 wird die Drehzahl ω der elektrischen Maschine innerhalb einer ersten Zeitspanne t₁ auf Null abgesenkt. Hierfür wird eine aktuelle Solldrehzahl bestimmt und ausgehend von dieser die Führungsgröße 36 des gesteuerten Betriebs 34 verändert. Hierfür wird die flussbildende Komponente I_{d} innerhalb der ersten Zeitspanne t₁ auf Null geführt. Die Absenkung der Drehzahl ω erfolgt linear, sodass weitere mit der Welle verbundene Bauteile der Kunststoffspritzanlage nicht übermäßig belastet werden.

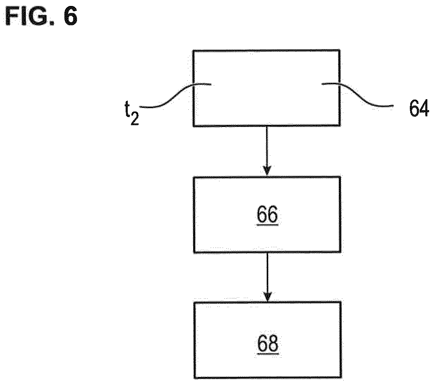

In Fig. 6 ist eine Variante zu dem in Fig. 5 gezeigten gesteuerten Betrieb 34 gezeigt. In einem ersten Arbeitsschritt 64 des gesteuerten Betriebs 34 wird ausgehend von der Führungsgröße 20 des geregelten Betriebs 18 die Stellgröße 38 des gesteuerten Betriebs 34 vorgegeben, wobei sowohl die flussbildende Komponente I_{d} als auch die drehmomentbildende I_{q} gleich Null gewählt werden und dies mittels der beiden Regler 60, 62 sichergestellt wird. Mit anderen Worten wird darauf geregelt, dass über die Stromleitung 14 kein elektrischer Strom fließt. Mit anderen Worten wird das in Fig. 5 gezeigt Verfahren zunächst für eine zweite Zeitspanne t₂ ausgeführt, mit der Maßgabe, dass die flussbildende und die drehmomentbildende Komponente I_{d}, I_{q} gleich Null (0) sind. Anhand der gemessenen ersten Stromkomponente î_{α} und der gemessenen Stromkomponente î_{β} sowie der verwendeten dritten Spannungskomponente u_{d} und vierten Spannungskomponente u_{q} wird in einem zweiten Arbeitsschritt 66 eine gemessene erste Spannungskomponente û_{α} und eine zweite gemessene Spannungskomponente û_{β} ermittelt, die die beiden Komponenten eines Spannungsvektors in einem ortsfesten Koordinatensystem bezeichnen. Der elektrische Spannungsvektor ergibt sich hierbei aufgrund von Induktion und entspricht der gegen-elektromotorischen Kraft (EMK). Diese beiden gemessenen Spannungskomponenten û_{α}, û_{β} werden am Ende der zweiten Zeitspanne t₂ ermittelt, wobei die zweite Zeitspanne zwischen 2 ns und 3 ns gewählt wird. Alternativ werden die beiden gemessenen Spannungskomponenten û_{α}, û_{β} mittels eines Models berechnet.

Sobald die gemessene erste Spannungskomponente û_{α} und die gemessene zweite Spannungskomponente û_{β} ermittelt wurden, diese werden in einem dritten Arbeitsschritt 68 als Stellgröße 38 herangezogen und hieraus jeweils eine dritte und vierte Spannungskomponente u_{d}, u_{q} ermittelt. Die Ermittlung erfolgt derart, dass die Drehzahl ω innerhalb einer mittels der Differenz der ersten Zeitspanne t₁ und zweiten Zeitspanne t₂ gebildete Zeitspanne auf Null absinkt. Mit anderen Worten werden die dritte und vierte Spannungskomponente u_{d}, u_{q} derart zeitlich verändert, dass nach Erkennen des Geberfehlers 30 die elektrische Maschine 6 innerhalb der ersten Zeitspanne t₁ stillsteht. Auch hier erfolgt die Absenkung der beiden Spannungskomponenten u_{d}, u_{q} linear, sodass die Drehzahl ω linear gegen Null geht.

### Bezugszeichenliste

- 2: Antrieb
- 4: Umrichter
- 6: elektrische Maschine
- 8: Welle
- 10: Drehgeber
- 12: Signalleitung
- 14: Stromleitung
- 16: Verfahren
- 18: geregelter Betrieb
- 20: Führungsgröße des geregelten Betriebs
- 22: Stellgröße des geregelten Betriebs
- 24: Cosinus-Spur
- 26: Sinus-Spur
- 28: Amplitude
- 30: Geberfehler
- 32: Grenzwert
- 34: gesteuerter Betrieb
- 36: Führungsgröße des gesteuerten Betriebs
- 38: Stellgröße des gesteuerten Betriebs
- 42: erstes Modul
- 44: zweites Modul
- 46: Treiberschaltung
- 48: Brückenschaltung
- 50: Halbleiterschalter
- 52: erster Stromsensor
- 54: zweiter Stromsensor
- 56: drittes Modul
- 58: viertes Modul
- 60: erster Regler
- 62: zweiter Regler
- 64: erster Arbeitsschritt
- 66: zweiter Arbeitsschritt

- u_{α}: erste Spannungskomponente
- u_{β}: zweite Spannungskomponente
- u_{d}: dritte Spannungskomponente
- u_{q}: vierte Spannungskomponente
- u₁: erste Phasenspannung
- u₂: erste Phasenspannung
- u₃: erste Phasenspannung
- û_{α}: gemessene erste Spannungskomponente
- û_{β}: gemessene zweite Spannungskomponente

- I_{d}: flussbildenden Komponente
- I_{q}: drehmomentbildenden Komponente
- î_{α}: gemessene erste Stromkomponente
- î_{β}: gemessene zweite Stromkomponente
- î_{d}: gemessene dritte Stromkomponente
- î_{q}: gemessene vierte Stromkomponente

- ω: Drehzahl

- t₁: erste Zeitspanne
- t₂: zweite Zeitspanne

## Patentansprüche

1. Verfahren (16) zum Betrieb einer einen Drehgeber (10) aufweisenden elektrischen Maschine (6), bei dem, falls im geregelten Betrieb (18) ein Geberfehler (30) erkannt wird, auf einen gesteuerten Betrieb (34) umgeschaltet wird,
**dadurch gekennzeichnet,**
**dass** beim Umschalten auf den gesteuerten Betrieb (34) als Führungsgröße (36) die Führungsgröße (20) des geregelten Betriebs (18) herangezogen wird, wobei im gesteuerten Betrieb (34) die Drehzahl (ω) innerhalb einer ersten Zeitspanne (t₁) auf Null (0) abgesenkt wird, und wobei als Führungsgröße (36, 20) ein aktueller Winkel eines Rotors bezüglich eines Stators herangezogen wird.

2. Verfahren (16) nach Anspruch 1,
**dadurch gekennzeichnet,**
**dass** der Geberfehler (30) erkannt wird, falls die Summe des Quadrats eines aktuellen Werts einer Cosinus-Spur (24) des Drehgebers (10) und des Quadrats eines aktuellen Werts einer Sinus-Spur (26) des Drehgebers (10) kleiner als ein Grenzwert (32) ist.

3. Verfahren (16) nach Anspruch 1 oder 2,
**dadurch gekennzeichnet,**
**dass** beim geregelten Betrieb (18) als Stellgröße (22) eine elektrische Spannung (u_{α}, u_{β}) herangezogen wird.

4. Verfahren (16) nach einem der Ansprüche 1 bis 3,
**dadurch gekennzeichnet,**
**dass** im gesteuerten Betrieb (34) die Drehzahl (ω) zumindest abschnittsweise linear auf Null (0) abgesenkt wird.

5. Verfahren (16) nach einem der Ansprüche 1 bis 4,
**dadurch gekennzeichnet,**
**dass** als Stellgröße (38) des gesteuerten Betriebs (34) zumindest zeitweise ein elektrischer Strom mit einer flussbildenden (I_{d}) und einer drehmomentbildenden Komponente (I_{q}) herangezogen wird, wobei die drehmomentbildende Komponente (I_{q}) insbesondere gleich Null (0) gewählt wird.

6. Verfahren (16) nach Anspruch 5,
**dadurch gekennzeichnet,**
**dass** die flussbildende Komponente (I_{d}) verringert wird, insbesondere innerhalb der ersten Zeitspanne (t₁).

7. Verfahren (16) nach Anspruch 5,
**dadurch gekennzeichnet,**
**dass** nach dem Umschalten für eine zweite Zeitspanne (t₂) der elektrische Strom (I_{d}, I_{q}) auf Null (0) geregelt wird.

8. Verfahren (16) nach Anspruch 7,
**dadurch gekennzeichnet,**
**dass** nach der zweiten Zeitspanne (t₂) als Stellgröße (38) des gesteuerten Betriebs (34) eine elektrische Spannung (u_{q}, u_{d}) herangezogen wird.

9. Antrieb (2) mit einem Umrichter (4), und mit einer einen Drehgeber (10) aufweisenden elektrischen Maschine (6), wobei der Antrieb (2) eingerichtet ist, die elektrische Maschine (6) durch Ausführen eines Verfahrens (16) gemäß einem der Ansprüche 1 bis 8 zu betreiben.

## Claims

1. Method (16) for operating an electrical machine (6) having a rotary encoder (10), in which, if an encoder error (30) is detected in regulated operation (18), the machine is switched to a controlled operation (34),
**characterized in**
**that**, when switching to the controlled operation (34), the reference variable (20) of the regulated operation (18) is used as the reference variable (36), the rotational speed (ω) being reduced to zero (0) within a first time period (t₁) in controlled operation (34), and an actual angle of a rotor with respect to a stator being used as the reference variable (36, 20).

2. Method (16) according to claim 1,
**characterized in**
**that** the encoder error (30) is detected if the sum of the square of a current value of a cosine track (24) of the rotary encoder (10) and the square of a current value of a sine track (26) of the rotary encoder (10) is smaller than a limit value (32).

3. Method (16) according to claim 1 or 2,
**characterized in**
**that** in the regulated operation (18) an electrical voltage (u_{α}, u_{β}) is used as the manipulated variable (22).

4. Method (16) according to one of claims 1 to 3,
**characterized in**
**that**, in controlled operation (34), the rotational speed (ω) is linearly reduced to zero (0) at least in sections.

5. Method (16) according to one of claims 1 to 4,
**characterized in**
**that** an electric current with a flux-forming (I_{d}) and a torque-forming component (I_{q}) is used at least at times as the manipulated variable (38) of the controlled operation (34), the torque-forming component (I_{q}) being selected in particular to be equal to zero (0).

6. Method (16) according to claim 5,
**characterized in**
**that** the flux-forming component (I_{d}) is reduced, in particular within the first time period (t₁).

7. Method (16) according to claim 5,
**characterized in**
**that**, after switching for a second period of time (t₂), the electric current (I_{d}, I_{q}) is regulated to zero (0).

8. Method (16) according to claim 7,
**characterized in**
**that**, after the second time period (t₂), an electrical voltage (u_{q}, u_{d}) is used as the manipulated variable (38) of the controlled operation (34).

9. Drive (2) with an inverter (4), and an electric machine (6) having a rotary encoder (10), the drive (2) being arranged to operate the electric machine (6) by carrying out a method (16) according to one of claims 1 to 8.

## Revendications

1. Procédé (16) pour faire fonctionner une machine électrique (6) comprenant un codeur rotatif (10), dans lequel, si un erreur de codeur (30) est détecté en fonctionnement régulé (18), on commute à un fonctionnement commandé (34),
**caractérisé en ce**
**que**, lors de la commutation au fonctionnement commandé (34), comme grandeur de référence (36), la grandeur de référence (20) du fonctionnement régulé (18) est utilisée, la vitesse de rotation (ω) étant abaissée à zéro (0) dans un premier laps de temps (t₁) en fonctionnement commandé (34), et étant utilisé comme grandeur de référence (36, 20) un angle actuel d'un rotor par rapport à un stator.

2. Procédé (16) selon la revendication 1,
**caractérisé en ce**
**que** l'erreur de codeur (30) est détectée si la somme du carré d'une valeur actuelle d'une piste de cosinus (24) du codeur rotatif (10) et du carré d'une valeur actuelle d'une piste de sinus (26) du codeur rotatif (10) est inférieure à une valeur limite (32).

3. Procédé (16) selon la revendication 1 ou 2,
**caractérisé en ce**
**que**, lors du fonctionnement régulé (18), une tension électrique (u_{α}, u_{β}) est utilisée comme grandeur de réglage (22).

4. Procédé (16) selon l'une des revendications 1 à 3,
**caractérisé en ce**
**que**, en fonctionnement commandé (34), la vitesse de rotation (ω) est abaissée linéairement au moins par sections à zéro (0).

5. Procédé (16) selon l'une des revendications 1 à 4,
**caractérisé en ce**
**que**, comme grandeur de réglage (38) du fonctionnement commandé (34), au moins par moments, un courant électrique avec une composante formant flux (I_{d}) et une composante formant couple (I_{q}) est utilisé, la composante formant couple (I_{q}) étant choisie en particulier égale à zéro (0).

6. Procédé (16) selon la revendication 5,
**caractérisé en ce**
**que** la composante formant le flux (I_{d}) est réduite, en particulier pendant le premier laps de temps (t₁).

7. Procédé (16) selon la revendication 5,
**caractérisé en ce**
**qu'**après la commutation, pendant un deuxième laps de temps (t₂), le courant électrique (I_{d}, I_{q}) est réglé sur zéro (0).

8. Procédé (16) selon la revendication 7,
**caractérisé en ce**
**qu'**après le deuxième laps de temps (t₂), comme grandeur de réglage (38) du fonctionnement commandé (34) une tension électrique (u_{q}, u_{d}) est utilisée.

9. Entraînement (2) avec un convertisseur (4), et avec une machine électrique (6) comprenant un codeur rotatif (10), l'entraînement (2) étant adapté pour faire fonctionner la machine électrique (6) en exécutant un procédé (16) selon l'une des revendications 1 à 8.
